# EUROPEAN PATENT SPECIFICATION

(11) **EP 2 739 077 B1**
(45) Date of publication and mention of the grant of the patent: **13.12.2017**
(21) Application number: 12817854.8
(22) Date of filing: 31.05.2012
(51) Int. Cl.: H04W 4/06, G08B 27/00, H04M 1/00, H04M 3/42, H04W 72/00, H04W 76/04, H04W 76/00, H04W 4/22

(54) **MOBILE STATION, CONTROL DEVICE, BASE STATION, METHOD OF INSTALLATION IN THESE, AND COMPUTER-READABLE MEDIUM**
MOBILSTATION, STEUERVORRICHTUNG, BASISSTATION, INSTALLATIONSVERFAHREN DAFÜR UND COMPUTERLESBARES MEDIUM
STATION MOBILE, DISPOSITIF DE CONTRÔLE, STATION DE BASE, PROCÉDÉ MIS EN UVRE DANS CES ÉLÉMENTS ET SUPPORT LISIBLE PAR UN ORDINATEUR

(30) Priority: 25.07.2011 JP 2011162411
(43) Date of publication of application: 04.06.2014
(73) Proprietor: NEC Corporation, Tokyo 108-8001 (JP)
(72) Inventor: IWAI, Takanori, Tokyo 108-8001 (JP)
(74) Representative: MacDougall, Alan John Shaw
(86) International application number: PCT/JP2012/003582
(87) International publication number: WO 2013/014845

(56) References cited:
- EP-A1- 2 166 776
- EP-A2- 1 786 126
- WO-A1-2006/066629
- JP-A- 2004 187 279

## Description

### Technical Field

The present invention relates to a radio communication system that broadcasts a broadcast message to a plurality of mobile stations.

### Background Art

A system that broadcasts a broadcast message to mobile stations connected to a radio communication network has been known. An example of typical broadcast message is an emergency message. The emergency message relates to, for example, disasters such as earthquakes and tsunamis, weather, or traffic. 3GPP (3rd Generation Partnership Project) specifies architectures and protocols for broadcasting an emergency message as a CBS (Cell Broadcast Service) and an ETWS (Earthquake and Tsunami Warning System).

The procedure for delivering an emergency message in a UMTS (Universal Mobile Telecommunications System) is specified as a CBS in 3GPP TS 23.041. Further, the procedure for delivering an emergency message in an EPS (Evolved Packet System) is specified as "Warning message delivery procedure" in Chapter 5.12 of 3GPP TS 23.401. Fig. 12 shows a configuration diagram of an emergency message delivery network in the UMTS or the EPS. Further, Fig. 13 is a sequence diagram showing an emergency message delivery procedure in the UMTS specified in 3GPP TS 23.041. Fig. 14 is a sequence diagram showing an emergency message delivery procedure in the EPS specified in Chapter 5.12 of 3GPP TS 23.401.

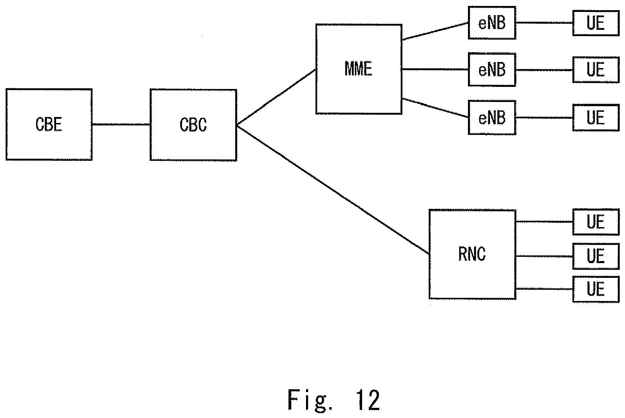

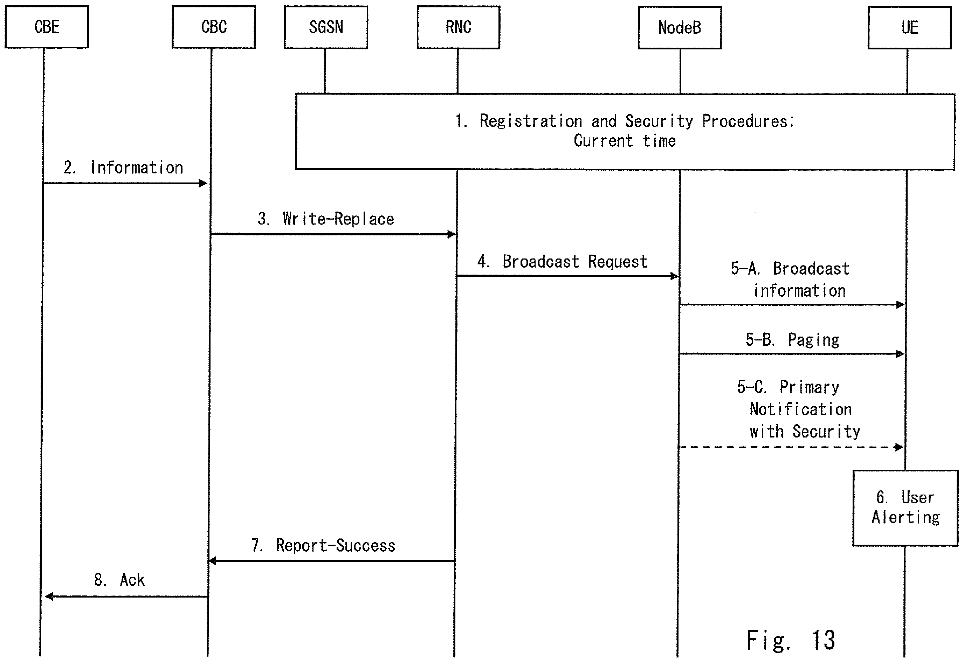

The CBE (Cell Broadcast Entity) shown in Figs. 12 and 13 is an apparatus/system that requests to transmit emergency message. For example, a server in the Meteorological Agency that sends an Early Earthquake Warning corresponds to the CBE. The CBC (Cell Broadcast Center) receives the transmission request for an emergency message from the CBE, determines the delivery area(s) of the emergency message, and determines the contents of the emergency message. The delivery area(s) is determined based on information for specifying the target region(s) contained in the transmission request for the emergency message received from the CBE. The delivery area(s) is determined on a sector basis, a cell basis, a paging area (routing area or tracking area) basis, or other arbitrary area basses determined by telecommunications carriers.

In the case of the UMTS, the CBC has an interface with an RNC (Radio Network Controller) or an SGSN (Serving GPRS Support Node). In the example shown in Figs. 12 and 13, the CBC is connected to an RNC. The CBC sends a Write-Replace message to the RNC. The Write-Replace message indicates the contents of the emergency message to be delivered to mobile stations and the designation of a delivery area(s). The RNC determines base stations (NodeBs) that should deliver the emergency message based on the Write-Replace message, and requests the determined base stations (NodeBs) to broadcast the emergency message.

In the case of the UMTS CBS, the emergency message is called "a CBS message" and transmitted by a CTCH (Common Traffic Channel), which is a downlink logical channel. The downlink CTTH is mapped on an FACH (Forward Access Channel), which is a transport channel, and transmitted on an S-CCPCH (Secondary Common Control Physical Channel), which is a physical channel. Further, the base station (NodeB) broadcasts a CTTH Indicator indicating the transmission of the downlink CTTH as broadcast information. Specifically, the CTTH Indicator is sent as one of information elements of broadcast information (BCCH (Broadcast Control Channel)) transmitted on a P-CCPCH (Primary Common Control Physical Channel). Further, the base station (NodeB) sends a paging message indicating that there is a change in the broadcast information (BCCH) on the S-CCPCH and thereby urges mobile stations in a standby state to receive the broadcast information.

In the UMTS/UTRAN (UMTS Terrestrial Radio Access Network), the mobile station (UE (User Equipment)) in a standby state (CELL_PCH state or URA_PCH state) acquires the CTTH Indicator contained in the broadcast information (BCCH) in response to the reception of the paging message. Then, when the CTTH Indicator has been set, the mobile station starts monitoring the CTTH and receives the emergency message.

Further, ETWS (Earthquake and Tsunami Warning System) is specified as an extension of the CBS in the 3GPP. In the ETWS, a Primary Notification message is transmitted by a paging message indicating that there is a change in broadcast information. The Primary Notification message indicates "Warning Type". The mobile station can immediately start a warning operation for a user (e.g., displaying popup notification or outputting warning sound) in response to the reception of the paging message (Primary Notification) before completing the receiving process of the "CBS message" as a Secondary Notification transmitted on the CTTH. Further, the use of the paging message provides another advantage that mobile stations in a communication state (CELL_DCH state) can also receive the emergency message.

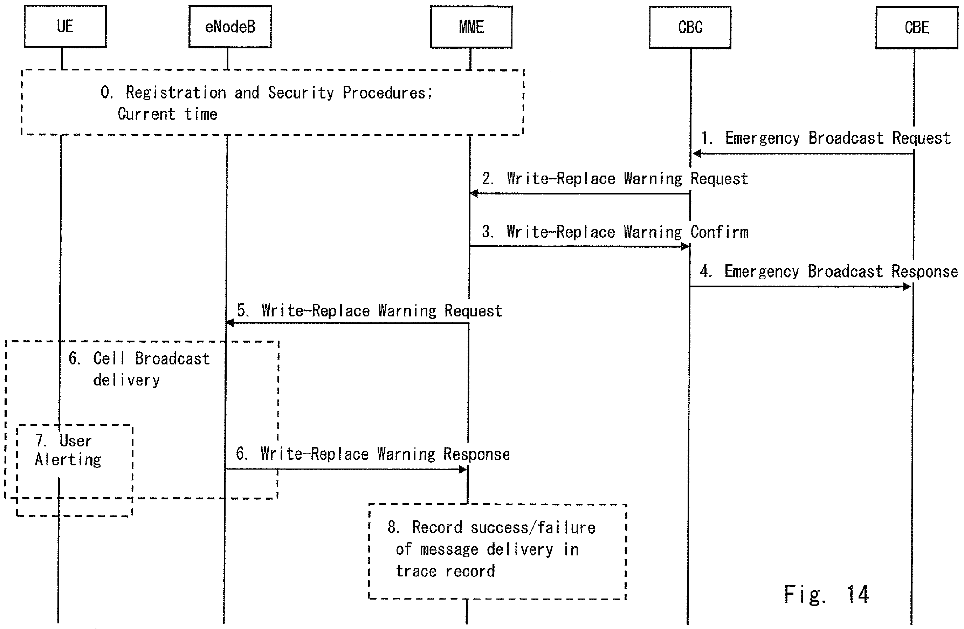

The delivery of an emergency message in the EPS shown in Fig. 14 is also performed according to architecture substantially similar to the above-described CBS of the UMTS. However, in the EPS, the CBC is connected to an MME (Mobility Management Entity) and the emergency message is supplied to base stations (eNodeBs) through the MME. The base station (eNodeB) sends, by a paging message, an ETWS Indication bit indicating that emergency message is delivered. The paging message is mapped on a PCH (Paging Channel) and transmitted on a PDSCH (Physical Downlink Shared Channel). Then, the base station (eNodeB) incorporates emergency message called "ETWS Message" into broadcast information (SIB (System Information Block)) and transmits the broadcast information including the emergency message. The ETWS Message includes "Warning type" as a Primary Notification and "Warning message" as a Secondary Notification. For example, the "Warning type" is transmitted on SIB10 and the "Warning message" is transmitted on SIB11. The base station (eNodeB) broadcasts the emergency message (ETWS Message) within the cell on BCCH (Broadcast Control Channel)/DL-SCH (Downlink Shared Channel)/PDSCH (Physical Downlink Shared Channel).

A mobile station in EPS/E-UTRAN (Evolved UTRAN) attempts to receive a paging message at least once per Default Paging Cycle irrespective of whether the mobile station is in a standby state (RRC_IDLE state) or a communication state (RRC_CONNECTED state). Then, upon receiving the paging message in which the ETWS Indication is set, the mobile station starts receiving the broadcast information (SIB) including the emergency message.

Note that as disclosed in Patent literature 1 and 2, the emergency message may be broadcasted by using an MBMS (Multimedia Broadcast Multicast Service) scheme.

Further, Patent literature 2 describes that a response message from a mobile station that has received the emergency message is preferably omitted in order to reduce the congestion in the network and the loads on network nodes (e.g., RNC, SGSN, and CBC). Further, Patent literature 2 also describes that the number of response messages from mobile stations can be reduced by collecting and editing the response messages in each branch (node) of the distribution tree for emergency messages, and as a result, the congestion in the network and the loads on network nodes can be reduced.

EP 2166776 discloses a mobile communication system including a mobile terminal and a base station which relays communications between a network and the mobile terminal, in which the base station can deliver information to the mobile terminal by using an MBMS, in which the base station sets a flag indicating presence or absence of emergency information to a control channel used for the MBMS, and notifies the presence or absence of the emergency information to the mobile terminal by using the description of the flag set to the control channel for the MBMS.

EP 1786126 discloses a mobile broadcast system for delivering a notification event for generation of a notification message for information provisioning to a subscriber receiving a broadcast service. The mobile broadcast system includes a first apparatus for managing subscriber information of the broadcast service, handling generation of at least one notification message according to at least one notification event, and generating a response message indicating generation end of the notification message; and a second apparatus for sending a notification event message for requesting generation of the notification message to the first apparatus according to the at least one notification event, receiving the response message in response thereto, and then handling delivery of the notification message over a broadcast channel or an interaction channel.

### Citation List

### Patent Literature

Patent literature 1: Japanese Unexamined Patent Application Publication No. JP 2011-61831
Patent literature 2: International Patent Publication No. WO 2006/066629

### Summary of Invention

### Technical Problem

The above-described broadcast/delivery systems for broadcast messages including emergency messages according to the CBS scheme and the ETWS scheme do not assume the reception of confirmation responses (the so-called "ACKs" or "NACKs") from mobile stations. However, there could be situations where it is desirable to be able to receive confirmation responses from mobile stations 400. For example, there are situations where broadcast message is used for the purpose of confirming the survival of users of mobile stations 400. Further, when an M2M (machine to machine) network is incorporated into a radio communication system, for example, the functions of a mobile station are disposed in respective machines (e.g., vending machines, gas meters, electricity meters, or automobiles) or in respective sensors (e.g., sensors for environment, agriculture, or traffic). It is conceivable that regarding a broadcast message used for such purposes, some kind of instruction (a data transmission request, an existence confirmation (keep alive), or the like) is simultaneously provided to these machines and sensors, and responses to this instruction are requested. Under the assumption that there are such purposes, the inventors of the present application have examined architectures for sending from mobile stations confirmation responses to broadcast message.

In such cases, it is conceivable that a mobile station sends a confirmation response to the CBC as a message in the application layer. In other words, it is conceivable that a mobile station sends a confirmation response as user data on a user plane (U-plane). However, to that end, the mobile station has to change to a communication state in which the mobile station can send and receive user data. In the case of the mobile station in the UMTS/UTRAN, the communication state in which the mobile station can send and receive user data corresponds to the CELL_DCH state. Further, in the case of the mobile station in the EPS/E-UTRAN, the communication state corresponds to the RRC_CONNECTED state. Broadcast message is received by all mobile stations present in a cell. Therefore, there is a problem that if all the mobile stations change from the standby state (the CELL_PCH state, the URA_PCH state, or the RRC_IDLE state) to the communication state at the same time, a number of signals for the state changes of those mobile stations occur between nodes (e.g., base stations, MMEs, RNCs, S-GWs, and SGSNs) disposed in the radio communication network and the mobile stations. Note that although Patent literature 2 discloses that a confirmation response is transmitted from a mobile station, it does not disclose any specific configuration or technique for a mobile station to transmit a response message.

The present invention provides a mobile station apparatus, a method for transmitting a confirmation response, a control apparatus, a base a station apparatus, and a method for receiving a confirmation response as set out in the appended claims. Preferred features are set out in the appended dependent claims.

### Solution to Problem

A first aspect includes a mobile station apparatus for connecting to a radio communication network. The mobile station apparatus is configured to receive a broadcast message broadcasted from the radio communication network on a downlink physical channel to be received by a plurality of mobile stations in a standby state. Further, the mobile station apparatus is characterized in that the apparatus further comprises sending means for sending a confirmation response indicating a reception status of the broadcast message to the radio communication network while remaining in the standby state without changing to a communication state in which user data can be transmitted and received.

A second aspect includes a control apparatus used in a radio communication network. The control apparatus is characterized in that it comprises receiving means for receiving confirmation responses indicating reception statuses of a broadcast message from a plurality of mobile stations while the plurality of mobile stations are in a standby state without changing to a communication state in which user data can be transmitted and received. The broadcast message is broadcasted from the radio communication network in a downlink physical channel to be received by the plurality of mobile stations in the standby state.

A third aspect includes a base station apparatus. The base station apparatus include a control apparatus according to the above-described second aspect of the present invention and is configured to transmit a downlink physical channel including the broadcast message.

A fourth aspect includes a method for sending a confirmation response in response to a broadcast message, performed by a mobile station apparatus capable of being connected to a radio communication network. The method is characterized in that it includes sending a confirmation response indicating a reception status of a broadcast message to the radio communication network while remaining in standby state without changing to a communication state in which user data can be transmitted and received. The broadcast message is broadcasted from the radio communication network in a downlink physical channel to be received by a plurality of mobile stations in the standby state.

A fifth aspect includes a method for receiving a confirmation response in response to a broadcast message, performed by a control apparatus used in a radio communication network. The method is characterized in that it includes receiving confirmation responses indicating reception statuses of a broadcast message from a plurality of mobile stations while the plurality of mobile stations are in a standby state without changing to a communication state in which user data can be transmitted and received. The broadcast message is broadcasted from the radio communication network in a downlink physical channel to be received by the plurality of mobile stations in the standby state.

### Advantageous Effects of Invention

According to the above-described aspects, it is possible to provide a mobile station, a method for sending a confirmation response, and a program capable of efficiently sending a confirmation response by a mobile station in response to a broadcast message broadcasted from a radio communication network while reducing the increase in the load on the radio communication network, and to provide a control apparatus, a base a station apparatus, a method for receiving a confirmation response, and a program for receiving a confirmation response from a mobile station apparatus.

### Brief Description of Drawings

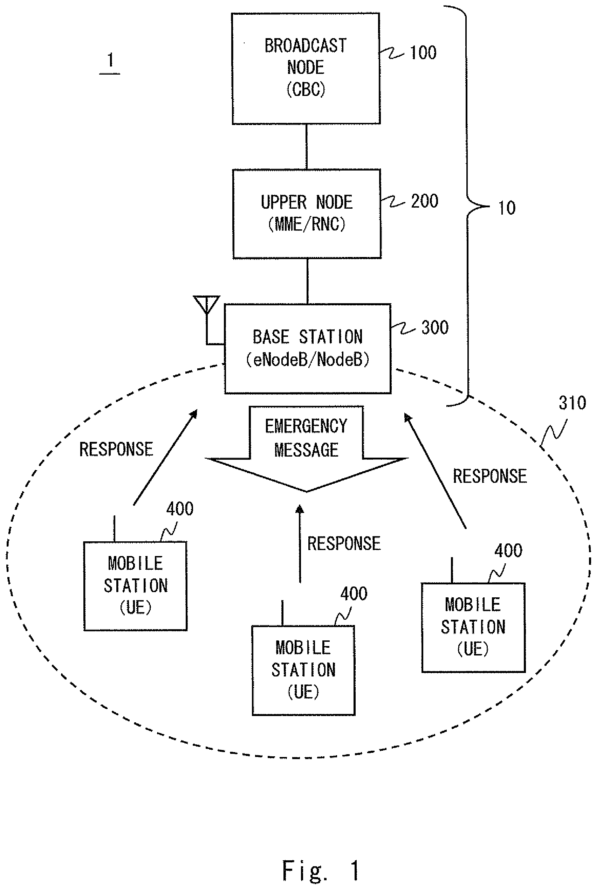

Fig. 1 is a block diagram showing a configuration example of a radio communication system according to a first embodiment;

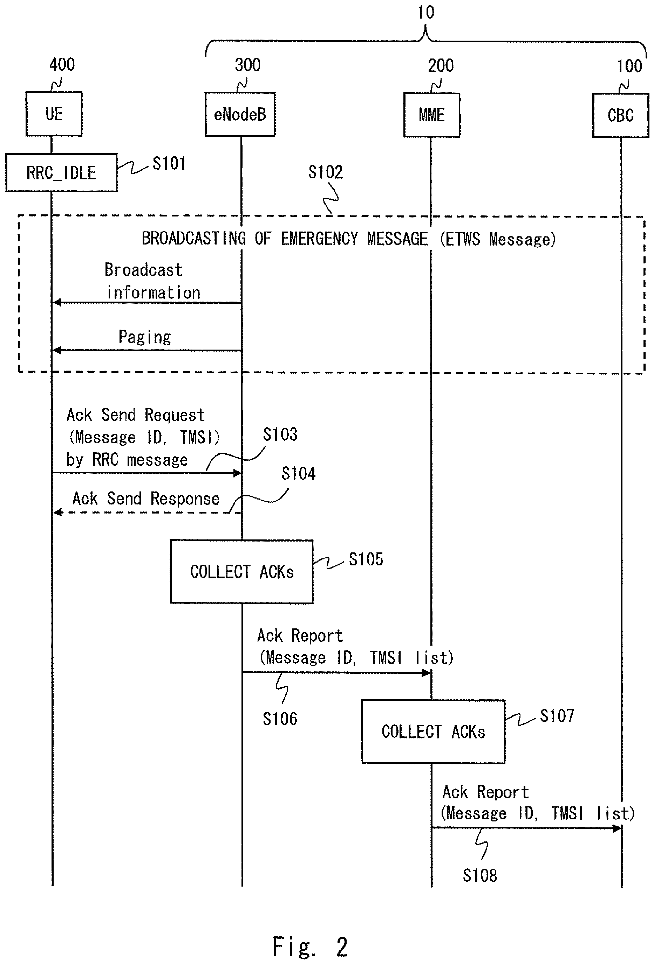

Fig. 2 is a sequence diagram showing a specific example of a procedure for delivering a broadcast message (e.g., an emergency message) according to a second embodiment (in the case of EPS);

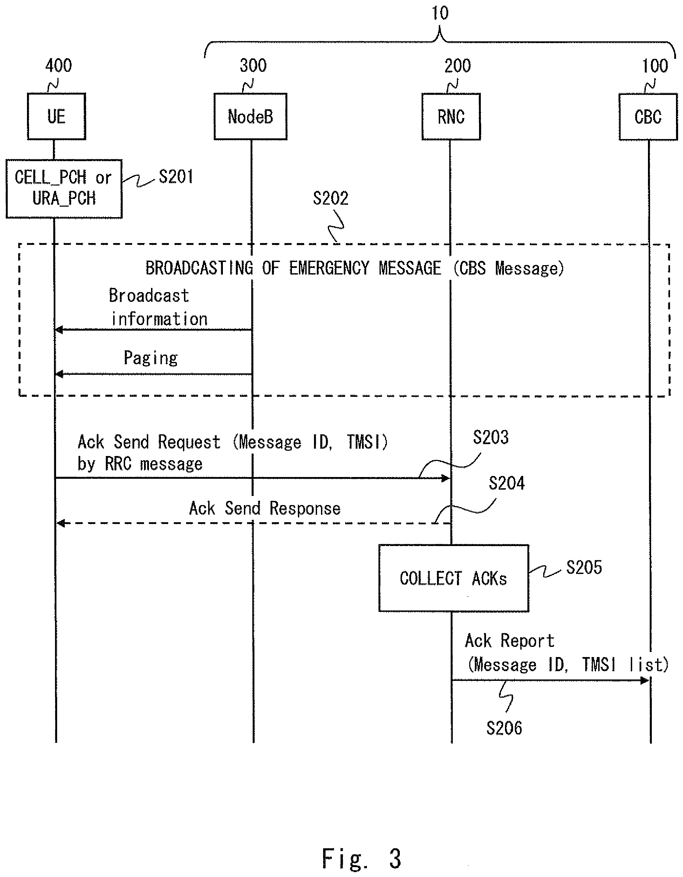

Fig. 3 is a sequence diagram showing a specific example of a procedure for delivering a broadcast message (e.g., an emergency message) according to a second embodiment (in the case of UMTS);

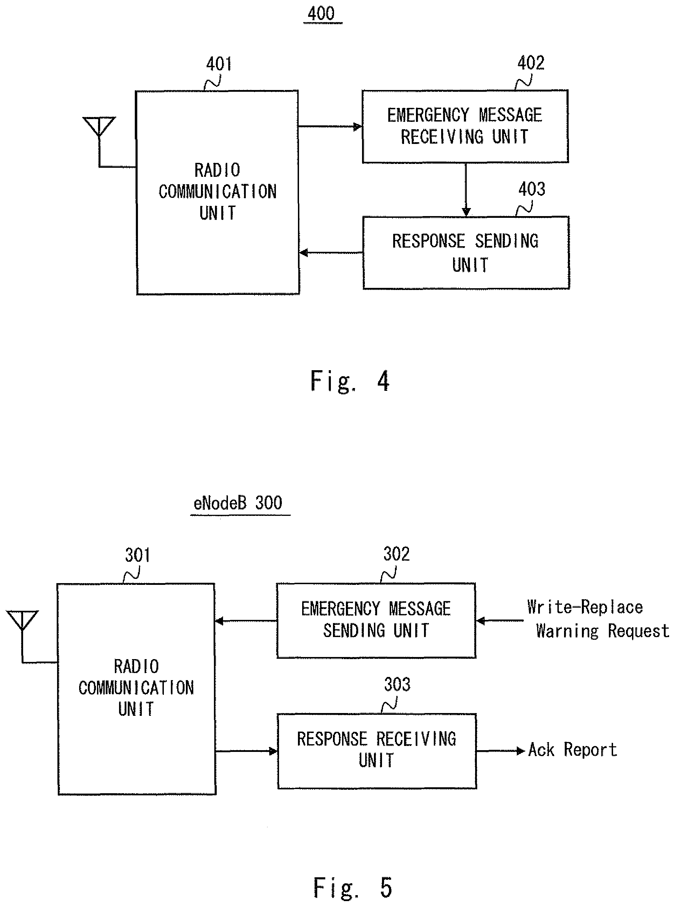

Fig. 4 is a block diagram showing a configuration example of a mobile station according to a second embodiment;
Fig. 5 is a block diagram showing a configuration example according to the second embodiment in a case where the base station is an eNodeB;

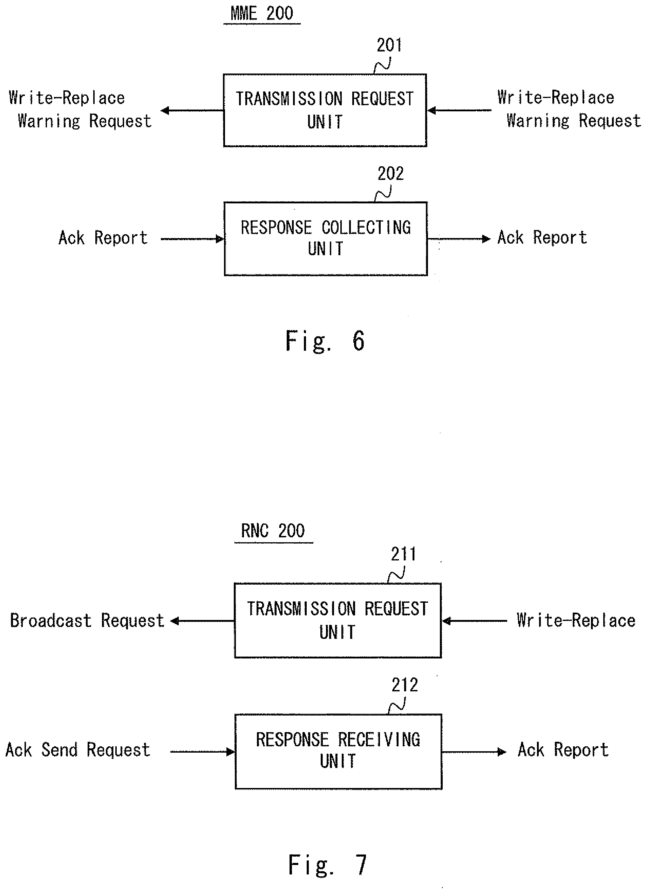

Fig. 6 is a block diagram showing a configuration example according to the second embodiment in a case where the upper node is an MME;
Fig. 7 is a block diagram showing a configuration example according to the second embodiment in a case where the upper node is an RNC;

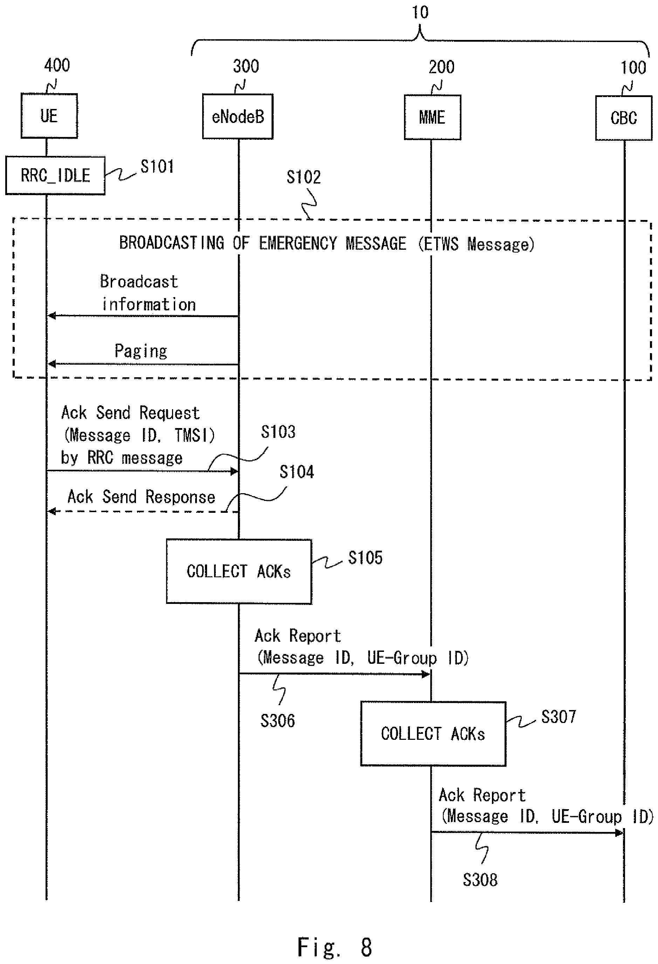

Fig. 8 is a sequence diagram showing a specific example of a procedure for delivering a broadcast message (e.g., an emergency message) according to a third embodiment (in the case of EPS);

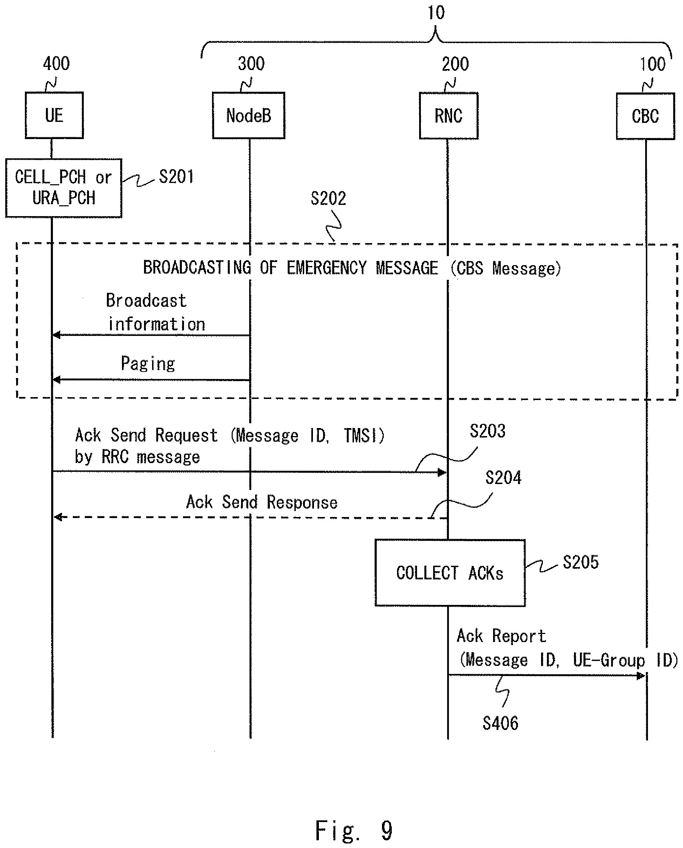

Fig. 9 is a sequence diagram showing a specific example of a procedure for delivering a broadcast message (e.g., an emergency message) according to the third embodiment (in the case of UMTS);

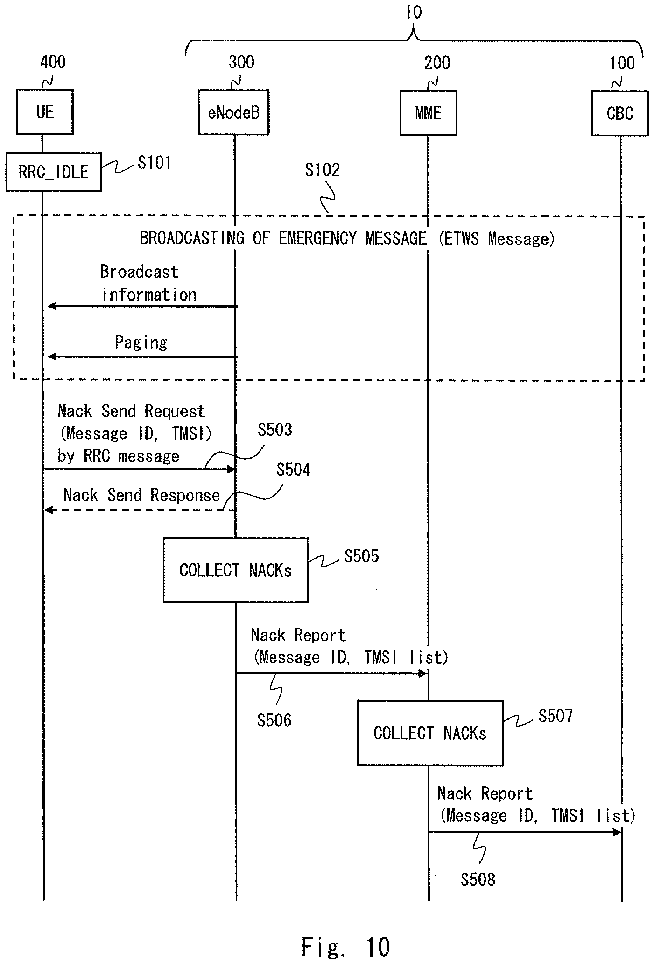

Fig. 10 is a sequence diagram showing a specific example of a procedure for delivering a broadcast message (e.g., an emergency message) according to a fourth embodiment (in the case of EPS);

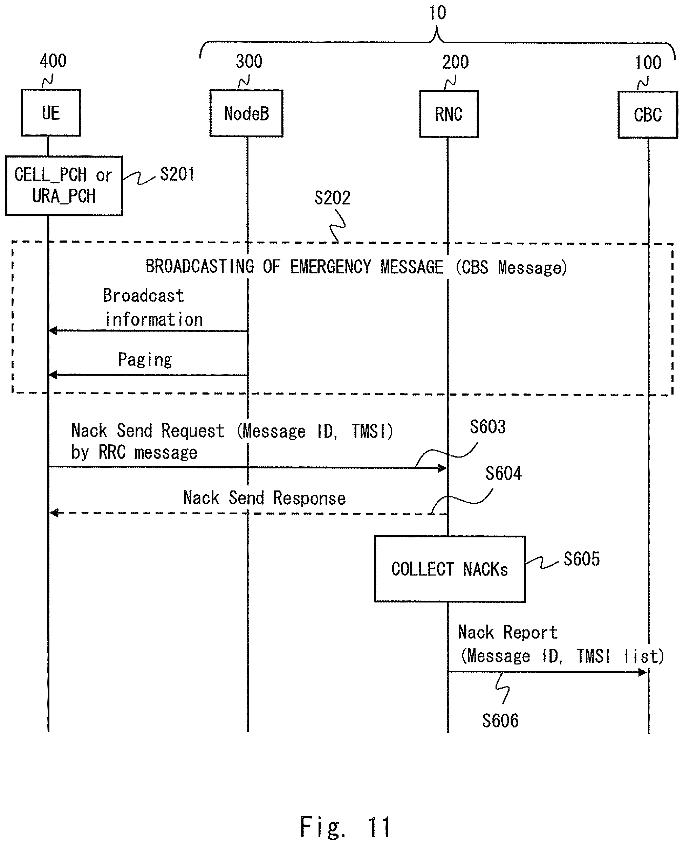

Fig. 11 is a sequence diagram showing a specific example of a procedure for delivering a broadcast message (e.g., an emergency message) according to a fourth embodiment (in the case of UMTS);
Fig. 12 shows a diagram showing a configuration of a broadcast message (e.g., an emergency message) delivery network in UMTS and EPS according to related art;
Fig. 13 is a sequence diagram showing a procedure for delivering a broadcast message (e.g., an emergency message) in UMTS according to related art (in the case of UMTS); and
Fig. 14 is a sequence diagram showing a procedure for delivering a broadcast message (e.g., an emergency message) in EPS according to related art (in the case of EPS).

### Description of Embodiments

Specific embodiments are explained hereinafter in detail with reference to the drawings. The same symbols are assigned to the same or corresponding elements throughout the drawings, and duplicated explanations are omitted as necessary.

### First embodiment

Fig. 1 is a block diagram showing a configuration example of a radio communication system 1 according to the first embodiment. Note that the first to fourth embodiments explain cases where the radio communication system 1 is an UMTS or an EPS according to the 3GPP. Further, the first to fourth embodiments explain cases where an emergency message is broadcasted as a broadcast message.

The radio communication system 1 includes a plurality of mobile stations (UEs) 400 and a radio communication network 10 configured to broadcast an emergency message to the plurality of mobile stations 400. In order to broadcast the emergency message, the radio communication network 10 includes a broadcast node 100, an upper node 200, and a base station 300. Broadcasting of the emergency message by the radio communication network 10 may be performed in a manner similar to that in the CBS and the ETWS described in the Background Art section. Therefore, Broadcasting of the emergency message performed by the radio communication network 10 is briefly explained hereinafter.

The broadcast node 100 corresponds to the CBC (Cell Broadcast Center), and determines the delivery area(s) of the emergency message and the contents of the emergency message. The upper node 200 has an interface with the CBC. In the case of the EPS, the MME (Mobility Management Entity) corresponds to the upper node 200. In the case of the UMTS, the RNC (Radio Network Controller) corresponds to the upper node 200. The upper node 200 receives an emergency message delivery request (i.e., Write-Replace message or Write-Replace Warning Request) from the broadcast node 100. The emergency message delivery request indicates the contents of the emergency message to be delivered to mobile stations and designation of a delivery area(s). The upper node 200 determines a base station(s) 300 that should deliver the emergency message, and requests the determined base station(s) 300 to broadcast the emergency message.

The base station 300 manages a cell 310 and can perform bidirectional communication with mobile stations by using uplink physical channels and downlink physical channels. In the case of the EPS, the eNodeB corresponds to the base station 300. In the case of the UMTS, the NodeB corresponds to the base station 300. The base station 300 delivers the emergency message in response to the reception of the emergency message delivery request (i.e., Broadcast Request or Write-Replace Warning Request) from the upper node 200. The base station 300 sends the emergency message (i.e., CBS message or ETWS Message) by using broadcast information and a paging message. The broadcast information and a paging message which include the emergency message are transmitted on a downlink physical channel(s) (i.e., PDSCH in the E-UTRAN, and P-CCPCH and S-CCPCH in the UTRAN) to be received by mobile stations (UEs) 400 in a standby state (i.e., an RRC_IDLE state in the E-UTRAN, or a CELL_PCH state or an URA_PCH state in the UTRAN).

The mobile station (UE) 400 receives the emergency message broadcasted from the base station 300. The mobile station 400 may perform a warning operation for a user, such as displaying a popup indication or outputting a warning sound, in response to the reception of the emergency message. The mobile station 400 receives the emergency message at least when the mobile station 400 is in the standby state (i.e., an RRC_IDLE state in the E-UTRAN, or a CELL_PCH state or an URA_PCH state in the UTRAN). The mobile station 400 in the standby state cannot transmit or receive user data, and intermittently receives a paging channel including a paging message transmitted from the radio communication network 10 (i.e., performs Discontinuous Reception (DRX)). Further, mobile stations in the EPS and the UMTS receive a paging signal even when they are in a communication state (i.e., an RRC_CONNECTED state in the E-UTRAN or a CELL_DCH state in the UTRAN). Therefore, mobile stations 400 in the EPS and the UMTS receive the emergency message even in the communication state.

Further, in the radio communication system 1 according to this embodiment, each mobile station 400 is configured to send a confirmation response indicating the reception status of the emergency message to the radio communication network 10 while remaining in the standby state (i.e., an RRC_IDLE state in the E-UTRAN, or a CELL_PCH state or an URA_PCH state in the UTRAN) without changing to the communication state (i.e., an RRC_CONNECTED state in the E-UTRAN or a CELL_DCH state in the UTRAN) in which the mobile station 400 can transmit and receive user data. Further, the radio communication network 10 is configured to receive the confirmation responses indicating the reception statuses of the emergency message from the plurality of mobile stations 400 remaining in the standby state. The confirmation response transmitted from the mobile stations 400 may be a response indicating that the emergency message has been successfully received (the so-called "ACK") or a response indicating that the emergency message could not be successfully received (the so-called "NACK").

In order to perform transmission of the confirmation response for the emergency message from the mobile station 400 in the standby state to the radio communication network 10, the mobile station 400 may send the confirmation response by using a signaling message that is terminated in Access Stratum. The signaling message that is terminated in the Access Stratum means a signaling message that is used in an Access Stratum protocol. The Access Stratum protocol is a protocol handling signals to be terminated by nodes (i.e., an eNodeB, a NodeB, or an RNC) within a radio access network (i.e., UTRAN or E-UTRAN). In the cases of the E-UTRAN and UTRAN, the Access Stratum protocol includes RRC (Radio Resource Control), RLC (Radio Link Control), and MAC (Medium Access Control).

More specifically, the mobile station 400 may send a confirmation response by using a signaling message (RRC message), which is a control-plane (C-plane) protocol of the layer 3. In such case, the confirmation response is received by a node that terminates the RRC within the radio communication network 10. That is, in the case of the E-UTRAN, the base station (eNodeB) 300 receives the confirmation response transmitted by using the RRC message. Further, in the case of the UTRAN, typically, the upper node (RNC) 200 receives the confirmation response transmitted by using the RRC message. Alternatively, the base station (NodeB) 300 of the UTRAN may receive the confirmation response by monitoring the RRC message.

Next, a logical channel, a transport channel, and a physical channel that the mobile station 400 in the standby state can use to send the confirmation response to the emergency message are explained in a specific manner. In the case of the E-UTRAN, the standby state corresponds to the RRC_IDLE state. The mobile station 400 in the RRC_IDLE state sends the confirmation response without changing to the communication state (RRC_CONNECTED state), i.e., without establishing the RRC (Radio Resource Control) connection with the radio communication network 10. To that end, the mobile station 400 may send the confirmation response to the base station (eNodeB) 300 by using a transport channel UL-SCH (Uplink Shared Channel) and a logical channel CCCH (Common Control Channel) which are transmitted on a physical channel PUSCH (Physical Uplink Shared Channel), as in the case of sending the RRC Connection Request message to request an RRC connection.

In the case of the UTRAN, the standby state corresponds to the CELL_DCH state or the CELL_FACH state. The mobile station 400 in the CELL_DCH state or the CELL_FACH state sends the confirmation response without changing to the communication state (CELL_DCH state), i.e., without allocation of uplink dedicated physical channels (DPDCH (Dedicated Physical Data Channel) and DPCCH (Dedicated Physical Control Channel)). To that end, the mobile station 400 may send the confirmation response to the upper node (RNC) 200 through the base station (NodeB) 300 by using a transport channel RACH (Random Access Channel) and a logical channel CCCH (Common Control Channel) which are transmitted on a physical channel PRACH (Physical Random Access Channel).

A node (the base station 300 or the upper node 200) within the radio communication network 10, which has received the confirmation response from the mobile station 400, may forward the confirmation response to a further upper node (the upper node 200 or the broadcast node 100) on the delivery path of the emergency message. Note that the confirmation responses from the mobile stations 400 may be individually forward, or may be collected as appropriate at each node and then forwarded to the upper node.

As described above, in this embodiment, each mobile station 400 is configured to send the confirmation response indicating the reception status of the emergency message to the radio communication network 10 while remaining in the standby state (i.e., an RRC_IDLE state in the E-UTRAN, or a CELL_PCH state or an URA_PCH state in the UTRAN). Further, the radio communication network 10 is configured to receive the confirmation responses indicating the reception statuses of the emergency message from the plurality of mobile stations 400 remaining in the standby state. Therefore, the mobile station 400 does not need to change to the communication state in which the mobile station 400 can transmit and receive user data. Further, the situation where a number of signals for the state changes of mobile stations 400 occur between nodes (e.g., a base station, an MME, an RNC, an S-GW, or an SGSN) disposed in the radio communication network 10 and the mobile stations 400 does not happen. As a result, it is possible to enable the mobile stations 400 to efficiently send the confirmation responses in response to the broadcast message broadcasted from the radio communication network 10 while reducing the increase in the load on the radio communication network 10.

### Second embodiment

In the above-described first embodiment, a specific method for enabling the mobile station 400 in the standby state to send the confirmation response to the emergency message is explained. This embodiment explains a method for collecting a plurality of confirmation responses coming from the plurality of mobile stations 400 in the radio communication network 10. A configuration example of a mobile communication system according to this embodiment may be similar to that of the example according to the first embodiment shown in Fig. 1. A procedure for collecting the confirmation responses to the emergency message according to this embodiment is explained hereinafter.

Fig. 2 is a sequence diagram showing a procedure for collecting the confirmation responses according to this embodiment. Note that Fig. 2 shows a case where the radio communication system according to this embodiment is an EPS. In a step S101, a mobile station 400 is in the standby state (RRC_IDLE state) and intermittently receives a paging signal. In a step S102, an emergency message (ETWS Message) is broadcasted from the radio communication network 10 to mobile stations 400. Broadcasting in the step S102 may be performed according to a procedure similar to the delivery procedure (Fig. 4) described in the Background Art section, and the emergency message (ETWS Message) may be transmitted by using broadcast information and a paging signal as described above in the first embodiment. Therefore, a detailed explanation of the procedure for broadcasting the emergency message is omitted here.

In a step S103, the mobile station 400 sends a confirmation response (Ack send Request) indicating the reception status of the emergency message to the base station (eNodeB) 300 while remaining in the standby state. In the example in Fig. 2, the confirmation response is transmitted by using an RRC message. Further, the example in Fig. 2 shows a case where the confirmation response is an ACK indicating the successful reception of the emergency message. The confirmation response (Ack send Request) includes an identifier (message ID) that specifying the emergency message received by the mobile station 400 and an identifier of the mobile station 400 that has sent the confirmation response (e.g., IMSI (International Mobile Subscriber Identity), IMEI (International Mobile Equipment Identity), TMSI (Temporary Mobile Subscriber Identity), or M-TMSI (MME-TMSI)).

In a step S104, the base station 300 sends to the mobile station 400 a response indicating that the base station 300 has received the confirmation response. Note that the transmission of the response in the step S104 may be omitted in order to avoid the load on the base station 300 and the congestion in the radio access network.

In a step S105, the base station 300 collects a plurality of confirmation responses received from a plurality of mobile stations 400, and thereby creates a confirmation response report (Ack Report) that is edited so as to integrate the confirmation responses from the plurality of mobile stations 400. In a step S106, the base station 300 sends the confirmation response report to the upper node (MME) 200. The confirmation response report includes the identifier (message ID) specifying the emergency message and a list of identifiers (e.g., a list of TMSIs) specifying the plurality of mobile stations 400 that have sent the confirmation responses corresponding to this message ID. The transmission of the confirmation report in the step S106 may be performed by using a control interface (i.e., S1-MME interface) between the base station (eNodeB) 300 and the upper node (MME) 200.

In a step S107, the upper node (MME) 200 receives the confirmation response report from each of the plurality of base stations 300. Then, the upper node 200 further collects received confirmation response reports, creates a confirmation response report that is edited so as to integrate the reports from the plurality of base stations 300, and sends this newly edited confirmation response report to the broadcast node (CBC) 100 (step S108).

Next, a procedure in the case of the UMTS is explained. Fig. 3 is a sequence diagram showing a procedure for collecting the confirmation responses according to this embodiment in a case where the mobile communication system is an UMTS. In a step S201, the mobile station 400 is in the standby state (CELL_PCH state or URA_PCH state) and intermittently receives a paging signal. In a step S202, the emergency message (CBS Message) is broadcasted from the radio communication network 10 to the mobile stations 400. Broadcasting in the step S202 may be performed according to a procedure similar to the delivery procedure (Fig. 13) described in the Background Art section, and the emergency message (CBS Message) may be transmitted by using broadcast information and a paging signal as described above in the first embodiment. Therefore, a detailed explanation of the procedure for broadcasting emergency message is omitted here.

In a step S203, the mobile station 400 sends a confirmation response (Ack send Request) indicating the reception status of the emergency message to the upper node (RNC) 200 while remaining in the standby state. In the example in Fig. 2, the confirmation response is transmitted by using an RRC message. Further, the example in Fig. 2 shows a case where the confirmation response is an ACK indicating the successful reception of the emergency message. The confirmation response (Ack send Request) includes an identifier (message ID) of the emergency message and an identifier of the mobile station 400 that has sent the confirmation response (e.g., IMSI, IMEI, TMSI, or P-TMSI (Packet TMSI)).

In a step S204, the upper node 200 sends to the mobile station 400 a response indicating that the upper node 200 has received the confirmation response. Note that the transmission of the response in the step S204 may be omitted in order to avoid the load on the upper node 200 and the congestion in the radio access network.

In a step S205, the upper node 200 collects a plurality of confirmation responses received from a plurality of mobile stations 400, and thereby creates a confirmation response report (Ack Report) that is edited so as to integrate the confirmation responses from the plurality of mobile stations 400. In a step S206, the upper node 200 sends the confirmation response report to the broadcast node (CBC) 100. The confirmation response report includes the identifier (message ID) specifying the emergency message and a list of identifiers (e.g., a list of TMSIs) specifying the plurality of mobile stations 400 that have sent the confirmation responses corresponding to this message ID.

Next, configuration examples of the mobile station 400, the base station 300, and the upper node 200 are explained with reference to Figs. 4 to 7. Figs. 4 to 7 show only main components relevant to the explanation of a procedure for sending and collecting confirmation responses to the emergency message. Fig. 4 is a block diagram showing a configuration example of the mobile station 400. A radio communication unit 401 receives downlink signals including a plurality of downlink physical channels from the base station 300. Further, the radio communication unit 401 transmits uplink signals including a plurality of uplink physical channels to the base station 300.

An emergency message receiving unit 402 receives emergency message transmitted from the base station 300 on a downlink physical channel through the radio communication unit 401. Then the emergency message receiving unit 402 controls a response sending unit 403 so as to send the confirmation response indicating the reception status of the emergency message.

The response sending unit 403 controls the radio communication unit 401 so as to send the confirmation response to the radio communication network 10 while maintaining in the standby state (i.e., an RRC_IDLE state in the E-UTRAN, or a CELL_PCH state or an URA_PCH state in the UTRAN) without changing to the communication state (i.e., an RRC_CONNECTED state in the E-UTRAN or a CELL_DCH state in the UTRAN) in which the mobile station 400 can transmit and receive user data.

Fig. 5 is a block diagram showing a configuration example of the base station 300. Note that Fig. 5 shows a case where the base station 300 is an eNodeB. A radio communication unit 301 wirelessly transmits downlink signals including a plurality of downlink physical channels, and receives uplink signals including a plurality of uplink physical channels from the mobile stations 400. The plurality of downlink physical channels includes channels transferring broadcast information and a paging message used for the transmission of the emergency message.

An emergency message sending unit 302 controls the radio communication unit 301 so as to broadcast the emergency message in response to the reception of the emergency message delivery request (i.e., Write-Replace Warning Request) received from the upper node (MME) 200.

A response receiving unit 303 receives a plurality of confirmation responses sent from a plurality of mobile stations 400 remaining in a standby state, through the radio communication unit 301. Then, the response receiving unit 303 generates the confirmation response report that is edited by collecting the plurality of confirmation responses, and sends the generated confirmation response report to the upper node (MME) 200. For example, the response receiving unit 303 may receive confirmation responses over a predefined period that starts when the broadcasting of the emergency message starts, and may collect the confirmation responses received during this period.

Fig. 6 is a block diagram showing a configuration example in a case where the upper node 200 is an MME. A transmission request unit 201 receives the emergency message delivery request (i.e., Write-Replace Warning Request) from the broadcast node (CBC) 100, determines base stations 300 that should deliver the emergency message, and sends the Write-Replace Warning Request to the determined base stations (eNodeBs) 300 to request them to broadcast the emergency message.

A response collecting unit 202 receives the confirmation response report from each of a plurality of base stations (eNodeBs) 300, further collects a plurality of received confirmation response reports and thereby edits a confirmation response report, and transmits the newly edited confirmation response report to the broadcast node (CBC) 100. For example, the response collecting unit 202 may receive confirmation response reports over a predefined period from sending the request to broadcast the emergency message (the Write-Replace Warning Request), and may collect the confirmation response reports received during this period.

Fig. 7 is a block diagram showing a configuration example in a case where the upper node 200 is an RNC. A transmission request unit 211 receives the emergency message delivery request (i.e., Write-Replace message) from the broadcast node (CBC) 100, determines base stations 300 that should deliver the emergency message, and sends an emergency message transmission request (Broadcast Request) to the determined base stations (NodeBs) 300 to request them to broadcast the emergency message.

A response receiving unit 212 receives a plurality of confirmation responses transmitted from a plurality of mobile stations 400 remaining in a standby state, through the base stations (NodeBs) 300. Then, the response receiving unit 212 generates a confirmation response report that is edited by collecting the plurality of confirmation responses, and sends the generated confirmation response report to the broadcast node (CBC) 100. For example, the response receiving unit 212 may receive confirmation responses over a predefined period from sending the request to broadcast the emergency message (the Broadcast Request), and may collect the confirmation responses received during this period.

As described above, in this embodiment, the confirmation responses indicating the reception statuses of the emergency message are collected in a node (the base station 300 or the upper node 200) within the radio communication network 10 and the confirmation response report that is edited so as to integrate the confirmation responses from a plurality of mobile stations 400 is created. Then, this created confirmation response report is sent to a further upper node (the upper node 200 or the broadcast node 100) on the delivery path of the emergency message. As a result, it is possible to reduce the amount of data necessary to report the confirmation responses and thereby to reduce the load on the upper node.

### Third embodiment

In this embodiment, a modified example of the above-described second embodiment is explained. In this embodiment, the base station 300 or the upper node 200 manages a group of mobile stations 400 and monitors the reception statuses of confirmation responses from the mobile stations 400 included in the group. Specifically, when the base station 300 or the upper node 200 has successfully received confirmation responses (ACKs) from all mobile stations 400 included in the group thereof, the base station 300 or the upper node 200 may send a confirmation response report indicating an identifier of the mobile-station group (UE group ID) to a further upper node (the upper node 200 or the broadcast node 100) on the delivery path of the emergency message.

Further, when the base station 300 or the upper node 200 could not successfully receive confirmation responses (ACKs) from at least one of the mobile stations 400 included in the group thereof, the base station 300 or the upper node 200 may send an NACK (a response indicating that the emergency message could not be successfully received) to the upper node (the upper node 200 or the broadcast node 100) per mobile-station group. Note that under the normal circumstances, it is assumed that the number of mobile stations 400 that cannot successfully receive the emergency message is small. Therefore, when the base station 300 or the upper node 200 could not successfully receive confirmation responses (ACKs) from at least one of the mobile stations 400 included in the group thereof, the base station 300 or the upper node 200 may send an individual NACK per mobile station to the upper node (the upper node 200 or the broadcast node 100).

The base station 300 or the upper node 200 according to this embodiment needs to possess a list of mobile stations belonging to the mobile-station group in advance. The UE group ID to which the mobile stations 400 belong may be held, for example, in a subscriber server that holds subscriber information of the mobile stations 400. The base station 300 or the upper node 200 may acquire the UE group ID corresponding to the identifier of the mobile station 400 from the subscriber server at the time of an attach (initial connection) of the mobile station 400. In the case of the EPS, the subscriber server corresponds to the HSS (Home Subscriber Server). Further, in the case of the UMTS, the subscriber server corresponds to the HLR (Home Location Register).

Fig. 8 is a sequence diagram showing a procedure for collecting confirmation responses according to this embodiment in a case where the mobile communication system is an EPS. The processes and operations in steps S101 to S105 shown in Fig. 8 are similar to those in the steps S101 to S105 shown in Fig. 2. In a step S306, the base station (eNodeB) 300 sends the confirmation response report to the upper node (MME) 200. The confirmation response report includes an identifier (message ID) specifying the emergency message and a UE group ID.

In a step S307, the upper node (MME) 200 receives the confirmation response report from each of the plurality of base stations 300. Then, the upper node 200 further collects a plurality of received confirmation response reports, creates a confirmation response report that is edited so as to integrate the reports from the plurality of base stations 300, and transmits this newly edited confirmation response report to the broadcast node (CBC) 100 (step S308).

Fig. 9 is a sequence diagram showing a procedure for collecting confirmation responses according to this embodiment in a case where the mobile communication system is an UMTS. The processes and operations in steps S201 to S205 shown in Fig. 9 are similar to those in the steps S201 to S205 shown in Fig. 3. In a step S406, the upper node (RNC) 200 sends the confirmation response report to the broadcast node (CBC) 100. The confirmation response report includes an identifier (message ID) specifying the emergency message and a UE group ID.

According to this embodiment, it is possible to reduce the amount of data for the confirmation response report in comparison to the case where the list of identifiers (e.g., a list of TMSIs) specifying the mobile stations 400 is transmitted.

### <Fourth embodiment>

In this embodiment, a case where a mobile station 400 sends a NACK as the confirmation response indicating the reception status of the emergency message is explained. A configuration example of a mobile communication system according to this embodiment may be similar to that of the example according to the first embodiment shown in Fig. 1.

A mobile station 400 according to this embodiment sends the confirmation response (NACK) when the emergency message could not be successfully received. For example, the mobile station 400 determines unsuccessful reception of the emergency message in the following cases:
(1) A case where after receiving a paging message including an ETWS Indication, no Primary Notification is received within a predefined period;
(2) A case where after receiving a Primary Notification, no Secondary Notification is received within a predefined period;
(3) A case where when a plurality of types of predefined emergency message items are broadcasted, at least one of the emergency message items could not be received; or
(4) A case where no emergency message is received at a predetermined delivery time or within a delivery time period.

Fig. 10 is a sequence diagram showing a procedure for sending the confirmation response according to this embodiment in a case where the mobile communication system is an EPS. Fig. 10 shows an example in which when each node within the radio communication network 10 forwards confirmation responses (NACKs) received from the mobile stations 400 to a further upper node on the delivery path of the emergency message, the node collects the confirmation responses (NACKs). However, each node within the radio communication network 10 may individually forward confirmation responses (NACKs) received from the mobile stations 400 without collecting the confirmation responses (NACKs).

The processes and operations in steps S101 and S102 shown in Fig. 10 are similar to those in the steps S101 and S102 shown in Fig. 2. In a step S503, the mobile station 400 in the standby state sends to the base station (eNodeB) 300 the confirmation response (Nack send Request) indicating that the emergency message has not been successfully received. In a step S504, the base station 300 sends to the mobile station 400 a response indicating that the base station 300 has received the confirmation response. Note that the transmission of the response in the step S504 may be omitted in order to avoid the load on the base station 300 and the congestion in the radio access network.

The processes and operations in steps S505 to S508 may be similar to those in the steps S105 to S108 shown in Fig. 2 except that the confirmation response is a NACK. Therefore, the explanation of the steps S505 to S508 is omitted.

Fig. 11 is a sequence diagram showing a procedure for sending the confirmation response according to this embodiment in a case where the mobile communication system is an UMTS. Similarly to Fig. 10, Fig. 11 shows an example in which when the upper node (RNC) 200 within the radio communication network 10 forwards confirmation responses (NACKs) received from the mobile stations 400 to the broadcast node (CBC) 100, the upper node (RNC) 200 collects the confirmation responses (NACKs). However, the upper node (RNC) 200 within the radio communication network 10 may individually forward confirmation responses (NACKs) received from the mobile stations 400 without collecting the confirmation responses (NACKs).

The processes and operations in steps S201 and S202 shown in Fig. 11 are similar to those in the steps S201 and S202 shown in Fig. 3. In a step S603, the mobile station 400 in the standby state sends to the upper node (RNC) 200 the confirmation response (Nack send Request) indicating that the emergency message has not been successfully received. In a step S604, the upper node (RNC) 200 sends to the mobile station 400 a response indicating that the base station 300 has received the confirmation response. Note that the transmission of the response in the step S604 may be omitted in order to avoid the load on the base station 300 and the congestion in the radio access network.

The processes and operations in steps S605 and S606 may be similar to those in the steps S105 and S106 shown in Fig. 3 except that the confirmation response is a NACK. Therefore, the explanation of the steps S605 and S606 is omitted.

Under the normal circumstances, it is assumed that the number of mobile stations 400 that cannot successfully receive the emergency message is much smaller than the number of mobile stations 400 that can successfully receive the emergency message. Therefore, this embodiment can significantly reduce the total amount of data for the confirmation responses by sending responses (NACKs) indicating that the emergency message could not be successfully received instead of transmitting responses (ACKs) indicating that the emergency message has not been successfully received.

In this embodiment, the radio communication network 10 may be configured to resend the emergency message or perform an individual paging for a mobile station 400 that have sent the response (NACK) indicating that the emergency message has not been successfully received. In this manner, it is possible to reliably send the emergency message to a plurality of mobile stations 400.

### Other embodiments

In the above-described first to fourth embodiments, the confirmation response report, which is generated by collecting confirmation responses received from a plurality of mobile stations 400, may include the count number of confirmation responses received from the plurality of mobile stations 400 instead of the identifier list (e.g., a TMSI list) of the mobile stations 400 and the UE group ID. In this manner, it is possible to convey a statistical reception status of the mobile stations 400 to the upper node. Further, it is possible to reduce the amount of information for the confirmation response report.

Further, the above-described first to fourth embodiments explain cases where the emergency message is broadcasted from the radio communication network 10 to a plurality of mobile stations 400. However, as mentioned previously, the contents of the information broadcasted by the CBS, the ETWS, or the like (called "broadcast message") are not necessarily limited to emergency massages. For example, the broadcasting by the CBS or the ETWS can also be used for the cases where some kind of instruction (a data transmission request, an existence confirmation (keep alive), or the like) is simultaneously provided to a plurality of mobile stations 400. For example, when an M2M (machine to machine) network is incorporated into a radio communication system, the functions of a mobile station are disposed in respective machines (e.g., vending machines, gas meters, electricity meters, or automobiles) or in respective sensors (e.g., sensors for environment, agriculture, or traffic). When an instruction is simultaneously provided to these machines or sensors, the broadcasting by the CBS or the ETWS can be used. That is, the above-described first to fourth embodiments can be widely applied to the cases where some kind of broadcast message is broadcasted to a plurality of mobile stations 400.

Further, the above-described first to fourth embodiments explain radio communication systems in the EPS or the UMTS. However, the applications to which the above-described first to fourth embodiments are applied are not limited to the radio communication systems in the EPS or the UMTS. That is, the above-described first to fourth embodiments can be widely applied to radio communication systems in which some kind of broadcast message is broadcasted to a plurality of mobile stations.

Further, the processes of the mobile station 400, the base station 300, and the upper node 200 relating to the transmission or reception of the confirmation response from the mobile station 400 explained above in the first to fourth embodiments may be implemented by causing a computer such as a microprocessor or a DSP (Digital Signal Processor) to execute a program. Specifically, a program(s) including a group of instructions for causing a computer to execute the algorithm for each apparatus explained above with reference to the sequence diagrams shown in Figs. 2, 3, 8, 9, 10 and 11 may be created, and then the created program may be supplied to the computer.

This program can be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, and a CD-R/W, and a semiconductor memory (such as a mask ROM, a PROM (Programmable ROM), an EPROM (Erasable PROM), a flash ROM, and a RAM (Random Access Memory)). Further, the program can be supplied to computers by using various types of transitory computer readable media. Examples of the transitory computer readable media include an electrical signal, an optical signal, and an electromagnetic wave. The transitory computer readable media can be used to supply programs to computer through a wire communication path such as an electrical wire and an optical fiber, or a wireless communication path.

Further, the first to fourth embodiments can be combined as desired. Still further, the above-described embodiments are mere examples for the application of the technical idea achieved by the inventors of the present application. That is, needless to say, that technical idea is not limited to the above-described embodiments and various modifications can be made thereto.

This application is based upon and claims the benefit of priority from Japanese patent application No. 2011-162411, filed on July 25, 2011.

### Reference Signs List

- 1: RADIO COMMUNICATION SYSTEM
- 10: RADIO COMMUNICATION NETWORK
- 100: BROADCAST NODE (CBC)
- 200: UPPER NODE (MME or RNC)
- 201: TRANSMISSION REQUEST UNIT
- 202: RESPONSE COLLECTING UNIT
- 211: TRANSMISSION REQUEST UNIT
- 212: RESPONSE RECEIVING UNIT
- 300: BASE STATION (eNodeB or NodeB)
- 301: RADIO COMMUNICATION UNIT
- 302: EMERGENCY MESSAGE SENDING UNIT
- 303: RESPONSE RECEIVING UNIT
- 310: CELL
- 400: MOBILE STATION (UE)
- 401: RADIO COMMUNICATION UNIT
- 402: EMERGENCY MESSAGE RECEIVING UNIT
- 403: RESPONSE SENDING UNIT

## Claims

1. A mobile station apparatus (400) for connecting to a radio communication network (10), comprising:
receiving means (402) for receiving a broadcast message broadcasted from the radio communication network (10) in a downlink physical channel to be received by a plurality of mobile stations (400) in a standby state; **characterized in that** the apparatus further comprises:
sending means (403) for sending a confirmation response indicating a reception status of the broadcast message to the radio communication network (10) while remaining in the standby state without changing to a communication state in which user data can be transmitted and received.

2. The mobile station apparatus (400) according to Claim 1, wherein the standby state includes at least one of an RRC_IDLE state in E-UTRAN (Evolved UMTS Terrestrial Radio Access Network), a CELL_PCH state in UTRAN, and an URA_PCH state in UTRAN.

3. The mobile station apparatus (400) according to Claim 1 or 2, wherein the communication state includes at least one of an RRC_CONNECTED state in E-UTRAN, a CELL_DCH state in UTRAN, and a CELL_FACH state in UTRAN.

4. The mobile station apparatus (400) according to any one of Claims 1 to 3, wherein the standby state is a state where the user data cannot be transmitted and received and a paging channel transmitted from the radio communication network (10) is intermittently received.

5. The mobile station apparatus (400) according to any one of Claims 1 to 4, wherein the sending means (403) sends the confirmation response to the radio communication network (10) by using a signaling message terminated in an Access Stratum.

6. The mobile station apparatus (400) according to Claim 5, wherein the signaling message is an RRC (Radio Resource Control) message.

7. The mobile station apparatus (400) according to any one of Claims 1 to 6, wherein
the standby state is an RRC_IDLE state in E-UTRAN, and
the sending means (403) sends the confirmation response without establishing an RRC (Radio Resource Control) connection with the radio communication network (10).

8. The mobile station apparatus (400) according to Claim 7, wherein the sending means (403) sends the confirmation response to a base station (300) included in the radio communication network (10) by using a logical channel CCCH (Common Control channel) transmitted on a physical channel PUSCH (Physical Uplink Shared Channel).

9. The mobile station apparatus (400) according to any one of Claims 1 to 6, wherein
the standby state is a CELL_DCH state or a CELL_FACH state in UTRAN, and
the sending means (403) sends the confirmation response without allocation of uplink dedicated physical channels (DPDCH (Dedicated Physical Data Channel) and DPCCH (Dedicated Physical Control Channel)).

10. The mobile station apparatus (400) according to Claim 9, wherein the sending means (403) sends the confirmation response to an RNC (Radio Network Controller) (200) included in the radio communication network (10) by using a logical channel CCCH (Common Control Channel) transmitted on a physical channel PRACH (Physical Random Access Channel).

11. A control apparatus (202, 212, 303) used in a radio communication network (10), **characterized in that** the control apparatus comprises:
receiving means for receiving confirmation responses indicating reception statuses of broadcast message from a plurality of mobile stations (400) while the plurality of mobile stations (400) are in a standby state without changing to a communication state in which user data can be transmitted and received, the broadcast message being broadcasted from the radio communication network (10) in a downlink physical channel to be received by the plurality of mobile stations (400) in the standby state.

12. The control apparatus (202, 212, 303) according to Claim 11, wherein the standby state includes at least one of an RRC_IDLE state in E-UTRAN (Evolved UMTS Terrestrial Radio Access Network), a CELL_PCH state in UTRAN, and an URA_PCH state in UTRAN.

13. The control apparatus (202, 212, 303) according to Claim 11 or 12, wherein the receiving means receives the confirmation responses from the plurality of mobile stations (400) by using a signaling message terminated in an Access Stratum.

14. The control apparatus (202, 212, 303) according to Claim 13, wherein the signaling message is an RRC (Radio Resource Control) message.

15. The control apparatus (202, 212, 303) according to any one of Claims 11 to 14, wherein
the standby state is an RRC_IDLE state in E-UTRAN, and
the receiving means receives the confirmation responses without establishing an RRC (Radio Resource Control) connection with each of the plurality of mobile stations (400).

16. The control apparatus (202, 212, 303) according to Claim 15, wherein the receiving means receives the confirmation responses by using a logical channel CCCH (Common Control channel) transmitted on a physical channel PUSCH (Physical Uplink Shared Channel).

17. The control apparatus (202, 212, 303) according to any one of Claims 11 to 14, wherein
the standby state is a CELL_DCH state or a CELL_FACH state in UTRAN, and
the receiving means receives the confirmation responses without allocating uplink dedicated physical channels (DPDCH (Dedicated Physical Data Channel) and DPCCH (Dedicated Physical Control Channel)) to each of the plurality of mobile stations (400).

18. The control apparatus (202, 212, 303) according to Claim 17, wherein the receiving means receives the confirmation responses by using a logical channel CCCH (Common Control Channel) transmitted on a physical channel PRACH (Physical Random Access Channel).

19. The control apparatus (202, 212, 303) according to any one of Claims 11 to 18, further comprising notification means for notifying an upper node included in a delivery route for the broadcast message about a confirmation response report, the confirmation response report being edited by collecting the confirmation responses received from the plurality of mobile stations (400).

20. The control apparatus (202, 212, 303) according to Claim 19, wherein the confirmation responses report includes a group ID associated with the plurality of mobile stations (400).

21. The control apparatus (202, 212, 303) according to Claim 19 or 20, wherein the confirmation response report includes a count number of the confirmation responses received from the plurality of mobile stations (400).

22. The control apparatus (202, 212, 303) according to any one of Claims 11 to 21, wherein the confirmation responses includes an NACK message transmitted in response to an unsuccessful reception of the broadcast message.

23. A base station apparatus (300) comprising:
a control apparatus (303) according to any one of Claims 11 to 16; and
transmitting means (302) for transmitting a downlink physical channel including the broadcast message.

24. A method for sending a confirmation response in response to a broadcast message, performed by a mobile station apparatus (400) capable of being connected to a radio communication network (10), **characterized in that** the method comprises:
sending (S103, S203, S503, S603) a confirmation response indicating a reception status of a broadcast message to the radio communication network (10) while remaining in standby state without changing to a communication state in which user data can be transmitted and received, the broadcast message being broadcasted from the radio communication network (10) in a downlink physical channel to be received by a plurality of mobile stations (400) in the standby state.

25. A method for receiving a confirmation response in response to a broadcast message, performed by a control apparatus (202, 212, 303) used in a radio communication network (10), **characterized in that** the method comprises:
receiving (S103, S203, S503, S603) confirmation responses indicating reception statuses of a broadcast message from a plurality of mobile stations (400) while the plurality of mobile stations (400) are in a standby state without changing to a communication state in which user data can be transmitted and received, the broadcast message being broadcasted from the radio communication network (10) in a downlink physical channel to be received by the plurality of mobile stations (400) in the standby state.

## Patentansprüche

1. Mobilstationsvorrichtung (400) zur Verbindung mit einem Funkkommunikationsnetz (10), welche Folgendes aufweist:
Empfangsmittel (402) zum Empfangen einer vom Funkkommunikationsnetz (10) ausgestrahlten Rundfunknachricht in einem Abwärtsstrecken-Bitübertragungskanal, um sie von mehreren Mobilstationen (400) in einem Bereitschaftszustand zu empfangen, **dadurch gekennzeichnet, dass** die Vorrichtung ferner Folgendes aufweist:
Sendemittel (403) zum Senden einer Bestätigungsantwort, welche einen Empfangsstatus der Rundfunknachricht angibt, zum Funkkommunikationsnetz (10), während sie im Bereitschaftszustand verbleiben, ohne in einen Kommunikationszustand zu wechseln, in dem Benutzerdaten gesendet und empfangen werden können.

2. Mobilstationsvorrichtung (400) nach Anspruch 1, wobei der Bereitschaftszustand wenigstens einen von einem RRC_IDLE-Zustand in E-UTRAN (Evolved UMTS Terrestrial Radio Access Network), einem CELL_PCH-Zustand in UTRAN und einem URA_PCH-Zustand in UTRAN umfasst.

3. Mobilstationsvorrichtung (400) nach Anspruch 1 oder 2, wobei der Kommunikationszustand wenigstens einen von einem RRC_CONNECTED-Zustand in E-UTRAN, einem CELL_DCH-Zustand in UTRAN und einem CELL_FACH-Zustand in UTRAN umfasst.

4. Mobilstationsvorrichtung (400) nach einem der Ansprüche 1 bis 3, wobei der Bereitschaftszustand ein Zustand ist, in dem die Benutzerdaten nicht gesendet und empfangen werden können und ein Funkrufkanal, der vom Funkkommunikationsnetz (10) gesendet wird, intermittierend empfangen wird.

5. Mobilstationsvorrichtung (400) nach einem der Ansprüche 1 bis 4, wobei die Sendemittel (403) die Bestätigungsantwort unter Verwendung einer Signalisierungsnachricht, die in einer Access Stratum endet, zum Funkkommunikationsnetz (10) sendet.

6. Mobilstationsvorrichtung (400) nach Anspruch 5, wobei die Signalisierungsnachricht eine RRC(Radio Resource Control)-Nachricht ist.

7. Mobilstationsvorrichtung (400) nach einem der Ansprüche 1 bis 6, wobei
der Bereitschaftszustand ein RRC_IDLE-Zustand in E-UTRAN ist und
die Sendemittel (403) die Bestätigungsantwort senden, ohne eine RRC(Radio Resource Control)-Verbindung mit dem Funkkommunikationsnetz (10) einzurichten.

8. Mobilstationsvorrichtung (400) nach Anspruch 7, wobei die Sendemittel (403) die Bestätigungsantwort unter Verwendung eines logischen Kanals CCCH (Common Control channel), der auf einem Bitübertragungskanal PUSCH (Physical Uplink Shared Channel) übertragen wird, zur im Funkkommunikationsnetz (10) enthaltenen Basisstation (300) senden.

9. Mobilstationsvorrichtung (400) nach einem der Ansprüche 1 bis 6, wobei
der Bereitschaftszustand ein CELL_DCH-Zustand oder ein CELL_FACH-Zustand in UTRAN ist und
die Sendemittel (403) die Bestätigungsantwort ohne Zuweisung zweckgebundener Aufwärtsstrecken-Bitübertragungskanäle (DPDCH (Dedicated Physical Data Channel) und DPCCH (Dedicated Physical Control Channel)) senden.

10. Mobilstationsvorrichtung (400) nach Anspruch 9, wobei die Sendemittel (403) die Bestätigungsantwort unter Verwendung eines logischen Kanals CCCH (Common Control Channel), der auf einem Bitübertragungskanal PRACH (Physical Random Access Channel) übertragen wird, zu einem im Funkkommunikationsnetz (10) enthaltenen RNC (Radio Network Controller) (200) senden.

11. Steuervorrichtung (202, 212, 303), die in einem Funkkommunikationsnetz (10) verwendet wird, **dadurch gekennzeichnet, dass** die Steuervorrichtung Folgendes aufweist:
Empfangsmittel zum Empfangen von Bestätigungsantworten, die Empfangsstatus von Rundfunknachrichten angeben, von mehreren Mobilstationen (400), während sich die mehreren Mobilstationen (400) in einem Bereitschaftszustand befinden, ohne in einen Kommunikationszustand zu wechseln, in dem Benutzerdaten gesendet und empfangen werden können, wobei die Rundfunknachricht vom Funkkommunikationsnetz (10) in einem Abwärtsstrecken-Bitübertragungskanal ausgestrahlt wird, um von den mehreren Mobilstationen (400) im Bereitschaftszustand empfangen zu werden.

12. Steuervorrichtung (202, 212, 303) nach Anspruch 11, wobei der Bereitschaftszustand wenigstens einen von einem RRC_IDLE-Zustand in E-UTRAN (Evolved UMTS Terrestrial Radio Access Network), einem CELL_PCH-Zustand in UTRAN und einem URA_PCH-Zustand in UTRAN umfasst.

13. Steuervorrichtung (202, 212, 303) nach Anspruch 11 oder 12, wobei die Empfangsmittel die Bestätigungsantworten unter Verwendung einer Signalisierungsnachricht, die in einer Access Stratum endet, von den mehreren Mobilstationen (400) empfangen.

14. Steuervorrichtung (202, 212, 303) nach Anspruch 13, wobei die Signalisierungsnachricht eine RRC(Radio Resource Control)-Nachricht ist.

15. Steuervorrichtung (202, 212, 303) nach einem der Ansprüche 11 bis 14, wobei
der Bereitschaftszustand ein RRC_IDLE-Zustand in E-UTRAN ist und
die Empfangsmittel die Bestätigungsantworten empfangen, ohne eine RRC(Radio Resource Control)-Verbindung mit jeder der mehreren Mobilstationen (400) einzurichten.

16. Steuervorrichtung (202, 212, 303) nach Anspruch 15, wobei die Empfangsmittel die Bestätigungsantworten unter Verwendung eines logischen Kanals CCCH (Common Control channel), der auf einem Bitübertragungskanal PUSCH (Physical Uplink Shared Channel) übertragen wird, empfangen.

17. Steuervorrichtung (202, 212, 303) nach einem der Ansprüche 11 bis 14, wobei
der Bereitschaftszustand ein CELL_DCH-Zustand oder ein CELL_FACH-Zustand in UTRAN ist und
die Empfangsmittel die Bestätigungsantworten ohne Zuweisung zweckgebundener Aufwärtsstrecken-Bitübertragungskanäle (DPDCH (Dedicated Physical Data Channel) und DPCCH (Dedicated Physical Control Channel)) zu jeder der mehreren Mobilstationen (400) empfangen.

18. Steuervorrichtung (202, 212, 303) nach Anspruch 17, wobei die Empfangsmittel die Bestätigungsantworten unter Verwendung eines logischen Kanals CCCH (Common Control Channel), der auf einem Bitübertragungskanal PRACH (Physical Random Access Channel) übertragen wird, empfangen.

19. Steuervorrichtung (202, 212, 303) nach einem der Ansprüche 11 bis 18, welche ferner Benachrichtigungsmittel zum Benachrichtigen eines oberen Knotens, der in einem Auslieferungsweg für die Rundfunknachricht enthalten ist, über einen Bestätigungsantwortbericht aufweist, wobei der Bestätigungsantwortbericht durch Sammeln der von den mehreren Mobilstationen (400) empfangenen Bestätigungsantworten editiert wird.

20. Steuervorrichtung (202, 212, 303) nach Anspruch 19, wobei der Bestätigungsantwortbericht eine Gruppenkennung in Zusammenhang mit den mehreren Mobilstationen (400) aufweist.

21. Steuervorrichtung (202, 212, 303) nach Anspruch 19 oder 20, wobei der Bestätigungsantwortbericht einen Zählwert der von den mehreren Mobilstationen (400) empfangenen Bestätigungsantworten aufweist.

22. Steuervorrichtung (202, 212, 303) nach einem der Ansprüche 11 bis 21, wobei die Bestätigungsantworten eine NACK-Nachricht aufweisen, die ansprechend auf einen nicht erfolgreichen Empfang der Rundfunknachricht gesendet wird.

23. Basisstationsvorrichtung (300), welche Folgendes aufweist:
eine Steuervorrichtung (303) nach einem der Ansprüche 11 bis 16 und
Sendemittel (302) zum Senden eines Abwärtsstrecken-Bitübertragungskanals, der die Rundfunknachricht aufweist.

24. Verfahren zum Senden einer Bestätigungsantwort ansprechend auf eine Rundfunknachricht, das von einer Mobilstationsvorrichtung (400) ausgeführt wird, die mit einem Funkkommunikationsnetz (10) verbunden werden kann, **dadurch gekennzeichnet, dass** das Verfahren Folgendes aufweist:
Senden (S103, S203, S503, S603) einer Bestätigungsantwort, die einen Empfangsstatus einer Rundfunknachricht angibt, zum Funkkommunikationsnetz (10), während sie im Bereitschaftszustand bleibt, ohne in einen Kommunikationszustand zu wechseln, in dem Benutzerdaten gesendet und empfangen werden können, wobei die Rundfunknachricht vom Funkkommunikationsnetz (10) in einem Abwärtsstrecken-Bitübertragungskanal ausgestrahlt wird, um von mehreren Mobilstationen (400) im Bereitschaftszustand empfangen zu werden.

25. Verfahren zum Empfangen einer Bestätigungsantwort ansprechend auf eine Rundfunknachricht, das von einer Steuervorrichtung (202, 212, 303) ausgeführt wird, die in einem Funkkommunikationsnetz (10) verwendet wird, **dadurch gekennzeichnet, dass** das Verfahren Folgendes aufweist:
Empfangen (S103, S203, S503, S603) von Bestätigungsantworten, welche Empfangsstatus einer Rundfunknachricht von mehreren Mobilstationen (400) angeben, während die mehreren Mobilstationen (400) in einem Bereitschaftszustand sind, ohne in einen Kommunikationszustand zu wechseln, in dem Benutzerdaten gesendet und empfangen werden können, wobei die Rundfunknachricht vom Funkkommunikationsnetz (10) in einem Abwärtsstrecken-Bitübertragungskanal ausgestrahlt wird, um von den mehreren Mobilstationen (400) im Bereitschaftszustand empfangen zu werden.

## Revendications

1. Appareil de station mobile (400) pour la connexion à un réseau de communication radio (10), comprenant :
des moyens de réception (402) pour recevoir un message de radiodiffusion diffusé à partir du réseau de communication radio (10) dans un canal physique de liaison descendante pour être reçu par une pluralité de stations mobiles (400) dans un état de veille ; **caractérisé en ce que** l'appareil comprend en outre :
des moyens de transmission (403) pour envoyer une réponse de confirmation indiquant un état de réception du message radiodiffusé au réseau de communication radio (10) tout en restant dans l'état de veille sans changer pour un état de communication dans lequel des données d'utilisateur peuvent être transmises et reçues.

2. Appareil de station mobile (400) selon la revendication 1, dans lequel l'état de veille comprend au moins un parmi un état RRC_IDLE dans E-UTRAN (réseau d'accès radio terrestre UMTS évolué), un état CELL_PCH dans UTRAN et un état URA_PCH dans UTRAN.

3. Appareil de station mobile (400) selon la revendication 1 ou 2, dans lequel l'état de communication comprend au moins un parmi un état RRC_CONNECTED dans E-UTRAN, un état CELL_DCH dans UTRAN et un état CELL_FACH dans UTRAN.

4. Appareil de station mobile (400) selon l'une quelconque des revendications 1 à 3, dans lequel l'état de veille est un état dans lequel les données d'utilisateur ne peuvent pas être transmises et reçues et un canal de radiomessagerie transmis à partir du réseau de communication radio (10) est reçu de manière intermittente.

5. Appareil de station mobile (400) selon l'une quelconque des revendications 1 à 4, dans lequel les moyens de transmission (403) envoient la réponse de confirmation au réseau de communication radio (10) en utilisant un message de signalisation terminé dans une couche d'accès.

6. Appareil de station mobile (400) selon la revendication 5, dans lequel le message de signalisation est un message RRC (contrôle de ressources radio).

7. Appareil de station mobile (400) selon l'une quelconque des revendications 1 à 6, dans lequel
l'état de veille est un état RRC_IDLE dans E-UTRAN, et
les moyens de transmission (403) envoient la réponse de confirmation sans l'établissement d'une connexion RRC (contrôle de ressources radio) avec le réseau de communication radio (10).

8. Appareil de station mobile (400) selon la revendication 7, dans lequel les moyens de transmission (403) envoient la réponse de confirmation à une station de base (300) comprise dans le réseau de communication radio (10) en utilisant un canal logique CCCH (canal de commande commun) transmis sur un canal physique PUSCH (canal physique partagé de liaison montante).

9. Appareil de station mobile (400) selon l'une quelconque des revendications 1 à 6, dans lequel
l'état de veille est un état CELL_DCH ou un état CELL_FACH dans UTRAN, et
les moyens de transmission (403) envoient la réponse de confirmation sans allocation de canaux physiques dédiés de liaison montante (DPDCH (canal physique de données dédié) et DPCCH (canal physique de commande dédié)).

10. Appareil de station mobile (400) selon la revendication 9, dans lequel les moyens de transmission (403) envoient la réponse de confirmation à un RNC (contrôleur de réseau radio) (200) compris dans le réseau de communication radio (10) en utilisant un canal logique CCCH (canal de commande commun) transmis sur un canal physique PRACH (canal physique à accès aléatoire).

11. Appareil de commande (202, 212, 303) utilisé dans un réseau de communication radio (10), **caractérisé en ce que** l'appareil de commande comprend :
des moyens de réception pour recevoir des réponses de confirmation indiquant des états de réception de message de radiodiffusion d'une pluralité de stations mobiles (400) alors que la pluralité de stations mobiles (400) est dans un état de veille sans changer pour un état de communication dans lequel des données d'utilisateur peuvent être transmises et reçues, le message de radiodiffusion étant radiodiffusé à partir du réseau de communication radio (10) dans un canal physique de liaison descendante pour être reçu par la pluralité de stations mobiles (400) dans l'état de veille.

12. Appareil de commande (202, 212, 303) selon la revendication 11, dans lequel l'état de veille comprend au moins un parmi un état RRC_IDLE dans E-UTRAN (réseau d'accès radio terrestre UMTS évolué), un état CELL_PCH dans UTRAN et un état URA_PCH dans UTRAN.

13. Appareil de commande (202, 212, 303) selon la revendication 11 ou 12, dans lequel les moyens de réception reçoivent les réponses de confirmation de la pluralité de stations mobiles (400) en utilisant un message de signalisation terminé dans une couche d'accès.

14. Appareil de commande (202, 212, 303) selon la revendication 13, dans lequel le message de signalisation est un message RRC (contrôle de ressources radio).

15. Appareil de commande (202, 212, 303) selon l'une quelconque des revendications 11 à 14, dans lequel
l'état de veille est un état RRC_IDLE dans E-UTRAN, et
les moyens de réception reçoivent les réponses de confirmation sans l'établissement d'une connexion RRC (contrôle de ressources radio) avec chacune de la pluralité de stations mobiles (400).

16. Appareil de commande (202, 212, 303) selon la revendication 15, dans lequel les moyens de réception reçoivent les réponses de confirmation en utilisant un canal logique CCCH (canal de commande commun) transmis sur un canal physique PUSCH (canal physique partagé de liaison montante).

17. Appareil de commande (202, 212, 303) selon l'une quelconque des revendications 11 à 14, dans lequel
l'état de veille est un état CELL_DCH ou un état CELL_FACH dans UTRAN, et
les moyens de réception reçoivent les réponses de confirmation sans allouer des canaux physiques dédiés de liaison montante (DPDCH (canal physique dédié de données) et DPCCH (canal physique dédié de commande)) avec chacune de la pluralité de stations mobiles (400).

18. Appareil de commande (202, 212, 303) selon la revendication 17, dans lequel les moyens de réception reçoivent les réponses de confirmation en utilisant un canal logique CCCH (canal de commande commun) transmis sur un canal physique PRACH (canal physique à accès aléatoire).

19. Appareil de commande (202, 212, 303) selon l'une quelconque des revendications 11 à 18, comprenant en outre des moyens de notification pour notifier à un noeud supérieur compris dans un itinéraire d'acheminement pour le message de radiodiffusion concernant un rapport de réponse de confirmation, le rapport de réponse de confirmation étant édité en collectant les réponses de confirmation reçues de la pluralité de stations mobiles (400).

20. Appareil de commande (202, 212, 303) selon la revendication 19, dans lequel le rapport de réponse de confirmation comprend un identifiant de groupe associé à la pluralité de stations mobiles (400).

21. Appareil de commande (202, 212, 303) selon la revendication 19 ou 20, dans lequel le rapport de réponse de confirmation comprend un décompte des réponses de confirmation reçues de la pluralité de stations mobiles (400).

22. Appareil de commande (202, 212, 303) selon l'une quelconque des revendications 11 à 21, dans lequel les réponses de confirmation comprennent un message NACK transmis en réponse à une réception échouée du message de radiodiffusion.

23. Appareil de station de base (300) comprenant :
un appareil de commande (303) selon l'une quelconque des revendications 11 à 16 ; et
des moyens de transmission (302) pour transmettre un canal physique de liaison descendante comprenant un message de radiodiffusion.

24. Procédé pour envoyer une réponse de confirmation en réponse à un message de radiodiffusion, effectué par un appareil de station mobile (400) apte à être connecté à un réseau de communication radio (10), **caractérisé en ce que** le procédé comprend :
l'envoi (S103, S203, S503, S603) d'une réponse de confirmation indiquant un état de réception d'un message de radiodiffusion au réseau de communication radio (10) tout en restant dans l'état de veille sans changer pour un état de communication dans lequel des données d'utilisateur peuvent être transmises et reçues, le message de radiodiffusion étant diffusé à partir du réseau de communication radio (10) dans un canal physique de liaison descendante pour être reçu par une pluralité de stations mobiles (400) dans l'état de veille.

25. Procédé pour recevoir une réponse de confirmation en réponse à un message de radiodiffusion, effectué par un appareil de commande (202, 212, 303) utilisé dans un réseau de communication radio (10), **caractérisé en ce que** le procédé comprend :
la réception (S103, S203, S503, S603) de réponses de confirmation indiquant des états de réception d'un message de radiodiffusion d'une pluralité de stations mobiles (400) alors que la pluralité de stations mobiles (400) est dans un état de veille sans changer pour un état de communication dans lequel des données d'utilisateur peuvent être transmises et reçues, le message de radiodiffusion étant radiodiffusé à partir du réseau de communication radio (10) dans un canal physique de liaison descendante pour être reçu par la pluralité de stations mobiles (400) dans l'état de veille.
